Europäisches Patentamt

European Patent Office

Office européen des brevets

(11) Numéro de publication: **0 094 880**

**A1**

(12) **DEMANDE DE BREVET EUROPEEN**

(21) Numéro de dépôt: 83400961.5

(22) Date de dépôt: 11.05.83

(51) Int. Cl.³: **B 64 D 11/06**
**B 60 P 7/08**

(30) Priorité: 18.05.82 FR 8208667

(43) Date de publication de la demande:
23.11.83 Bulletin 83/47

(84) Etats contractants désignés:
AT BE CH DE GB IT LI LU NL SE

(71) Demandeur: TISSMETAL LIONEL-DUPONT
138 boulevard de la Croix-Rousse
F-69001 Lyon(FR)

(72) Inventeur: Martin, Gérard
Résidence Préfleury 19, Allée des Charmes
F-91310 Longpont-sur-Orge(FR)

(74) Mandataire: Bruder, Michel
10 rue de la Pépinière
F-75008 Paris(FR)

(54) Dispositif de mise en position des sièges d'un avion commercial équipé d'un dispositif de variation automatique du pas entre les sièges.

(57) La présente invention concerne un dispositif de mise en position des sièges d'un avion commercial équipé d'un dispositif de variation automatique du pas entre les sièges.

Ce dispositif est caractérisé en ce qu'il comporte une latte (6) formant butée fixée sur le rail (3), présentant une boutonnière longitudinale (16) traversée par l'organe d'arrimage (2) solidaire du pied du siège et dont les deux extrémités (16a,16b) constituent des butées antérieure et postérieure limitant positivement la course vers l'avant et vers l'arrière de l'organe d'arrimage (2) et par conséquent du siège.

EP 0 094 880 A1

Fig:1

0094880

La présente invention concerne un dispositif de mise en position des sièges d'un avion commercial équipé d'un dispositif de variation automatique du pas entre les sièges.

On connaît déjà, ainsi qu'il est décrit dans la demande de brevet français N° 79 14465, un dispositif permettant de faire varier le "pas" des sièges, autrement dit leur distance, dans un avion commercial, au moyen d'un système motorisé automatique actionnant un jeu de lattes de liaison entre les pieds avant d'un siège et les pieds arrière du siège précédent. Le dispositif de variation du pas permet un choix entre deux pas, un grand et un petit, lorsque l'ensemble du dispositif est mis en extension ou en compression par les éléments moteurs. Les déplacements relatifs des sièges entre eux sont programmés et obtenus automatiquement par les dimensions des pièces de liaison lorsque celles-ci sont "en butées" en compression ou en traction. Par contre, la position d'un groupe de sièges mobiles par rapport à un repère fixe dans l'avion n'est pas obtenue automatiquement. Cette position dépend uniquement du jugement de l'opérateur qui arrête le mouvement lorsqu'il estime, à l'aide d'un repère visuel, que le groupe de sièges se trouve à la position voulue.

Par ailleurs, et indépendamment du jugement de l'opérateur quant à la position des sièges, ce dispositif présente plusieurs inconvénients. En effet, compte tenu de l'inertie des pièces en mouvement et du fait que des frottements essentiellement variables existent entre ces pièces, le déplacement de certains sièges peut se produire avant que les butées prévues aux extrémités des boutonnières dans la latte de liaison ne viennent en contact avec les pièces correspondantes aux pieds des sièges mobiles. Or, c'est seulement lorsque les butées sont toutes en contact, en traction ou en compression, que les pas entre les sièges correspondent à l'une des deux configurations recherchées. On court donc le risque d'atteindre les positions voulues sur un rail ou sur certains sièges alors que ces positions ne seraient pas atteintes sur d'autres. Ces inconvénients sont particulièrement importants du fait que, pour pouvoir être verrouillé manuellement après son déplacement, chaque siège doit occuper une position bien précise par rapport aux trous des rails qui le supporte.

La présente invention vise essentiellement à remédier à ces inconvénients par des moyens particulièrement simples montés sur chaque rail et déterminant avec précision les positions d'un siège de référence situé le plus en avant et le plus en arrière, ce qui entraîne la détermination automatique, pour chaque siège du même groupe, d'une position précise à laquelle sont déplacement est arrêté.

A cet effet, ce dispositif de mise en position des sièges d'un avion commercial équipé d'un dispositif de variation automatique du pas entre les sièges, ces sièges étant immobilisés, dans des positions réglables, sur chaque rail présentant, dans sa face supérieure, une gorge à section droite sensiblement en queue d'aronde,cette gorge étant délimitée par deux lèvres intérieures et supérieures se faisant face dans lesquelles sont percés, à intervalles réguliers,des trous destinés à recevoir un organe mobile de verrouillage du siège,gorge dans laquelle s'agrippe un organe d'arrimage solidaire de chaque pied de chaque siège et empêchant la sortie de cet organe d'arrimage tout en permettant son coulissement longitudinal, les pieds des sièges étant reliés par des lattes de liaison longitudinales , est caractérisé en ce qu'il comporte une latte formant butée fixée sur le rail, présentant une boutonnière longitudinale traversée par l'organe d'arrimage solidaire du pied du siège et dont les deux extrémités constituent des butées antérieure et postérieure limitant positivement la course vers l'avant et vers l'arrière de l'organe d'arrimage et par conséquent du siège.

Le dispositif de mise en position précise suivant l'invention est associé à un siège de référence qui est obligatoirement, dans le groupe des sièges mobiles, celui qui est le plus éloigné du siège moteur, c'est-à-dire du siège où se trouve l'ensemble moteur produisant la variation du pas. Si le groupe de sièges mobiles est situé en avant du siège moteur, le siège de référence et la latte formant butée sont alors eux-mêmes situés au premier rang des sièges mobiles. Par contre, si le groupe de sièges mobiles est situé en arrière du siège moteur, c'est au dernier rang du groupe mobile que se situent le siège de référence et la latte formant butée.

Quelle que soit la configuration adoptée et le sens du déplacement, c'est toujours le siège de référence situé à l'extrémité du groupe en mouvement qui rencontre les butées antérieure et postérieure de la latte et qui est stoppé en position avant tous les autres. Les autres sièges sont à leur tour arrêtés successivement lorsqu'ils viennent en contact avec les butées prévues sur les lattes de liaison d'origine.

Lorsque l'ensemble des sièges mobiles a trouvé sa position, l'opérateur doit en principe arrêter le moteur pour éviter de forcer sur les éléments de liaison. Dans le dispositif de variation automatique du pas décrit dans la demande de brevet français N° 79 14485 il est prévu, dans chaque système de transmission et individuellement sur chaque rail, un limiteur de couple qui autorise l'opérateur à maintenir une force limitée, en compression ou en traction, sur la structure des sièges et sur les lattes de liaison, sans qu'il en résulte des dommages causés au mécanisme. Ce dispositif, associé à l'installation des butées de référence sur chaque rail, permet d'employer un seul moteur pour créer sur deux rails parallèles deux mouvements dont l'arrêt n'est pas nécessairement simultané. Il y a lieu de prévoir en effet des différences d'alignement transversal entre les deux rails, différences telles que les pieds d'un groupe de sièges se trouvent déjà en position sur un rail alors que sur l'autre rail, les autres pieds ne sont pas encore arrivés en butée. Il est donc nécessaire de terminer le mouvement de ces derniers, en maintenant les efforts, même s'ils n'ont plus d'effet sur les premiers. Le limiteur de couple prévu sur chaque rail, dans l'actionneur correspondant, permet au moteur de tourner et de maintenir une pression constante prédéterminée aussi longtemps que l'opérateur le juge nécessaire.

Compte tenu du fait que le dispositif suivant la demande de brevet français N° 79 14485 peut comporter des éléments de transmission irreversibles, tels que des réductions par pignons et vis sans fin, le simple arrêt du moteur ne suffit pas pour relâcher les efforts appliqués par les limiteurs de couple se trouvant en amont des réduction par vis sans fin dans la chaîne de transmission. Ces efforts résiduels maintiennent en permanence des tractions ou des compressions dans les lattes de liaison dans la structure des sièges mobiles. Il en résulte une difficulté supplémentaire pour le verrouillage manuel des sièges, du fait que ces efforts, en fixant rigidement la position des pieds, s'opposent aux légers déplacements rendus localement nécessaires par les tolérances d'exécution des trous dans les rails.

Suivant une caractéristique complémentaire de l'invention, le dispositif permet de remédier à cet inconvénient grâce à la prévision de moyens permettant le relâchement des efforts résiduels après l'arrêt du moteur. A cet effet, le dispositif de mise en position des sièges comprend des moyens provoquant automatiquement et pendant un court laps de temps, après l'arrêt du mouvement du moteur d'entraînement dans un sens déterminé, le mouvement de ce moteur en sens inverse.

Le dispositif suivant l'invention permet ainsi, grâce à l'inversion du sens de rotation du moteur, pendant un court laps de temps, de relâcher les tensions créées dans les éléments de la chaîne de transmission, sans entraîner un mouvement des sièges en sens inverse du précédent.

On décrira ci-après, à titre d'exemple non limitatif, une forme d'exécution de la présente invention, en référence au dessin annexé sur lequel :

La figure 1 est une vue en coupe axiale et verticale d'un dispositif d'immobilisation, vers l'avant ou vers l'arrière, d'un siège de référence d'un avion commercial.

La figure 2 est une vue en plan, avec arrachement partiel, du dispositif de la figure 1.

La figure 3 est une vue en coupe verticale et transversale faite suivant la ligne III-III de la figure 1.

La figure 4 est un schéma électrique du circuit de
commande du moteur électrique du dispositif de variation automatique du pas.

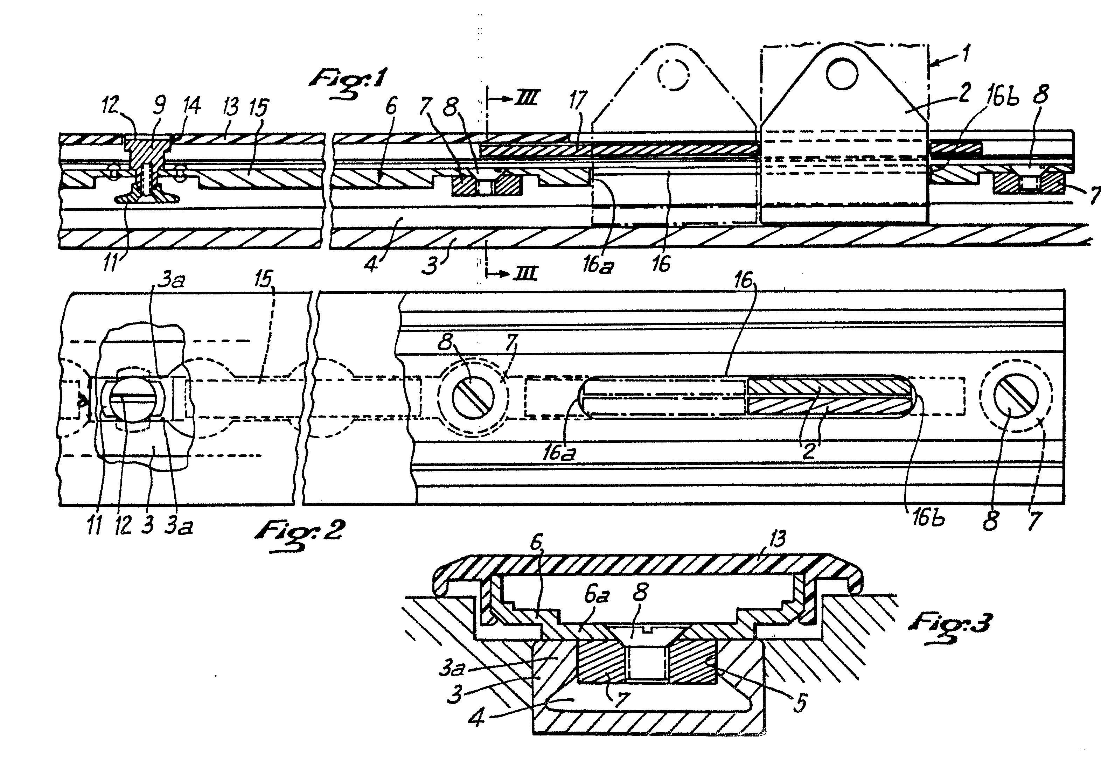

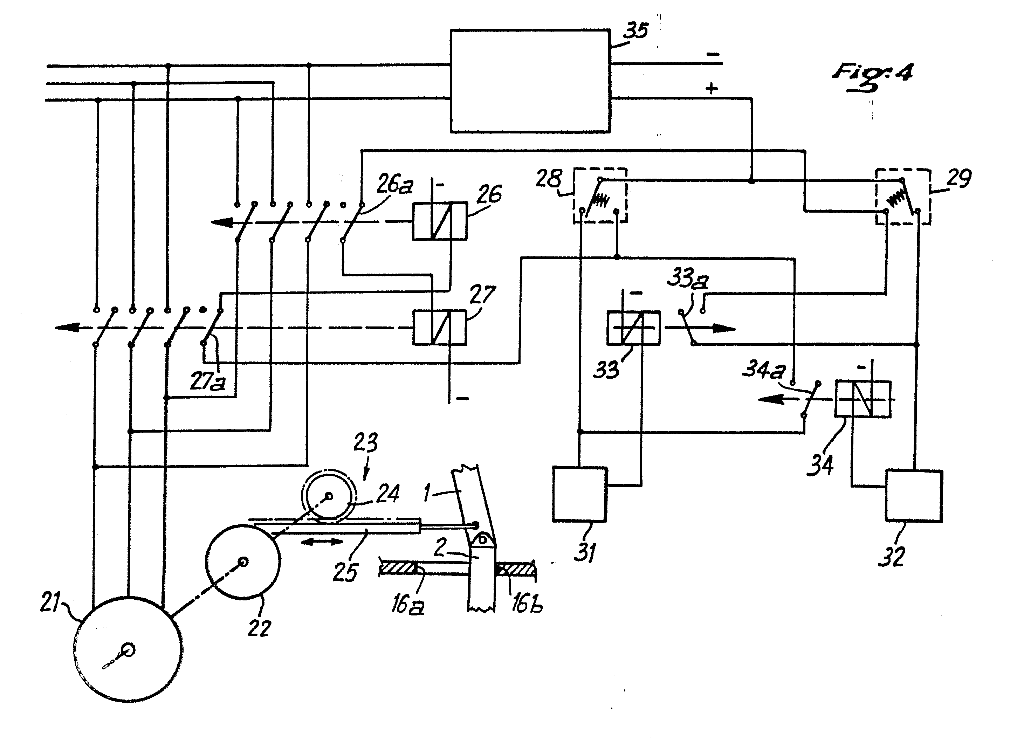

Le dispositif suivant l'invention qui est représenté
sur les figures 1 à 3, est destiné à limiter d'une manière
précise la course vers l'avant ou vers l'arrière d'un siège
d'un avion commercial, dans le cas où l'on fait varier le
pas entre deux valeurs différentes. Le siège auquel s'applique ce dispositif n'est représenté que par son pied avant
1, indiqué en trait mixte, lequel est solidaire d'organes
d'arrimage 2 dont les ailes inférieures sont retenues dans
un rail longitudinal 3, comme il est décrit dans la demande
de brevet français N°79 14485.Ce rail 3 présente, dans sa
partie supérieure, une gorge longitudinale 4 à section droite en forme de queue d'aronde. A des intervalles réguliers,
des trous verticaux 5 sont percés dans les lèvres supérieures et intérieures 3a du rail qui se font face et délimitent
la gorge 4,ces trous étant destinés à recevoir un organe
mobile verticalement assurant le verrouillage du siège en
position.

Le dispositif suivant l'invention comporte essentiellement une butée 6 qui est fixée sur le rail longitudinal 3, pour limiter la course vers l'avant et vers l'arrière
du pied avant 1 du siège mobile ou siège de référence situé
à l'extrémité d'une série de sièges se déplaçant sous l'action du système motorisé de variation du pas. Cette butée 6
est constituée par une latte profilée présentant une âme
inférieure horizontale 6a prenant appui sur les faces supérieures des deux ailes verticales du rail 3 et maintenue
transversalement par rapport au rail au moyen de pions de
centrage 7 engagés dans des trous 5 du rail 3. Ces pions 7
sont fixés à l'âme inférieure horizontale 6a, sous celle-ci,
au moyen de vis 8. Par aileurs, la butée 6 est maintenue
fixée au rail par l'intermédiaire de vis quart de tour 9
montées à rotation sur l'âme inférieure horizontale 6a de la
butée 6 et présentant chacune, à son extrémité inférieure, une patte 11 s'étendant diamétralement sur une longueur supérieure à l'intervalle a entre les deux lèvres 3a du rail 3. La tête 12 de chaque vis de blocage 9 présente une fente diamétrale pouvant être manoeuvrée au moyen d'un outil et apparaissant à travers un couvre-rail 13 s'étendant au-dessus de la butée 6. Plus particulièrement, cette tête 12 apparaît dans un trou 14 ménagé dans le couvre-rail 13 à l'endroit de la vis 9.

La butée 6 présente, en plusieurs endroits de sa longueur, des bossages inférieurs 15, de forte épaisseur, s'étendant longitudinalement et qui viennent se loger entre les lèvres 3a du rail 3 dans les zones où ne se trouvent ni une vis de blocage 9, ni un pion de centrage 7.

La butée 6 présente également, sur une partie de sa longueur, une boutonnière longitudinale 16 à travers laquelle passent les organes d'arrimage 2 du pied avant 1 du siège. Les deux extrémités 16a et 16b de cette boutonnière longitudinale 16 constituent des butées limitant effectivement le déplacement longitudinal du pied 1. Sur la figure 1, les organes d'arrimage sont représentés, en trait plein, dans la position extrême antérieure, dans laquelle ils sont en appui contre la butée antérieure 16b, et, en trait mixte, dans la position extrême postérieure, dans laquelle ils sont en appui contre la butée postérieure 16a.

Le couvre-rail 13 est solidaire de la butée 6, comme on peut mieux le voir sur la figure 3. La liaison entre les deux pièces peut être assurée par simple clipsage ou par tout autre moyen. Pour assurer la protection du rail 3 à l'égard de tout corps étranger, on peut prévoir additionnellement une lame horizontale et longitudinale 17 solidaire du pied 1 et s'engageant plus ou moins à l'intérieur du couvre-rail 13, en formant un ensemble télescopique.

On décrira maintenant en se référant à la figure 4, la façon dont s'effectue la commande électrique de la variation du pas entre les sièges. Les sièges sont déplacés longitudinalement, dans un sens ou dans l'autre, par un moteur électrique 21 qui entraîne, par l'intermédiaire d'un limiteur de couple 22, un mécanisme 23 transformant le mouvement de rotation du moteur en mouvement de translation, ce mécanisme 23 comprenant par exemple un pignon 24 entraîné en rotation par le limiteur de couple 22 et en prise avec une crémaillère longitudinale 25, cette dernière étant elle-même liée au pied avant 1 du siège par l'intermédiaire d'une latte de liaison. Le moteur électrique 21 est alimenté par un contacteur 26, dans le cas de la marche avant, ou un contacteur 27 dans le cas de la marche arrière. Le dispositif de commande électrique comprend par ailleurs un commutateur de marche avant 28, un commutateur de marche arrière 29, un circuit de temporisation en marche avant 31, un circuit de temporisation en marche arrière 32 et deux relais 33,34 connectés respectivement aux sorties de ces deux circuits de temporisation. Un bloc d'alimentation 35 est également prévu pour fournir, à partir d'une alimentation en courant alternatif, une tension continue de +24 volts par exemple. Les communs des deux commutateurs 28, 29 sont reliés au pôle plus de l'alimentation 35, leurs contacts de repos sont connectés respectivement aux entrées des deux circuits de temporisation 31 et 32, le contact de travail du commutateur de marche avant 28 est relié d'une part à l'entrée du circuit de temporisation 31, par l'intermédiaire du contact de travail 34a du relais 34, et d'autre part à la bobine du contacteur de marche avant 26, par l'intermédiaire d'un contact de repos 27a du contacteur de marche arrière 27. De même, le contact de repos du commutateur de marche arrière 29 est relié à l'entrée du circuit de temporisation 32 dont la sortie est connectée au relais 34, tandis que le contact de travail de ce commutateur 29 est relié à l'entrée du circuit de temporisation 32, par l'intermédiaire du contact de travail 33a du relais 33, et également à la bobine du contacteur de marche arrière 27, par l'intermédiaire du contact de repos 26a du contacteur de marche avant 26.

Le fonctionnement du dispositif de commande électrique tel qu'il vient d'être décrit, est le suivant. Si l'on veut faire passer le siège de référence qui se trouve en position postérieure, c'est-à-dire en appui contre la butée 16b, dans sa position antérieure en appui contre la butée 16a, on agit sur le bouton de commande du commutateur 28 pour le transférer en position de travail. A ce moment, le contacteur 26 de marche avant est excité à travers le contact 27a se trouvant au repos si bien que le moteur 21 est entraîné en rotation en marche avant. Il entraîne alors, par l'intermédiaire du limiteur de couple 22, le pignon 24 qui provoque une translation de la crémaillère 25 et un mouvement du siège vers l'avant. Ce mouvement du siège est interrompu lorsque le siège. ou plus particulièrement ses organes d'arrimage 2 viennent en contact avec la butée antérieure 16a. Le limiteur de couple 22 permet au moteur 21 de continuer à tour-ner, même lorsque le siège est immobilisé contre sa butée. Le limiteur 22 est conçu de manière à pouvoir délivrer une charge suffisante pour déplacer l'ensemble mobile et ne pas provoquer de surcharge risquant de détériorier les éléments du système lorsqu'ils se trouvent en butée. Lorsque l'opérateur relâche le bouton de commande du commutateur 28, une fois que le siège a atteint sa position antérieure, le retour en position de repos de ce commutateur provoque tout d'abord, instantanément, la coupure de l'excitation du contacteur de marche avant 26, à travers le contact 27a au repos, et également l'excitation du circuit de temporisation 31. Ce circuit émet alors à sa sortie un signal de durée réglable qui assure l'excitation du relais 33. Le contact de travail 33a se ferme alors, ce qui a pour effet d'entraîner l'excitation du contacteur de marche arrière 27 à travers le contact 26a, revenu au repos, du contacteur de marche avant 26. Les contacts du contacteur 27 qui commandent l'alimentation du moteur 21 sont alors fermés et ils restent fermés pendant un certain laps de temps fonction de la constante de temps du circuit de temporisation 31. Le moteur 21 tourne alors en sens inverse, pendant un court laps de temps, ce qui a pour effet de libérer la contrainte mécanique dans les éléments du système de variation de pas, sans qu'il en résulte un changement de position du siège se trouvant en place pour un verrouillage manuel.

Le dispositif suivant l'invention s'applique également au cas où le moteur d'entraînement est du type à alimentation par un fluide sous pression (vérin pneumatique ou hydraulique).Dans ce cas la temporisation ,après l'arrêt du moteur, est assurée par tout circuit fluidique connu approprié.

REVENDICATIONS

1- Dispositif de mise en position des sièges d'un avion commercial équipé d'un dispositif de variation automatique du pas entre les sièges, ces sièges étant immobilisés, dans des positions réglables, sur chaque rail présentant, dans sa face supérieure, une gorge à section droite sensiblement en queue d'aronde,cette gorge étant délimitée par deux lèvres intérieures et supérieures se faisant face dans lesquelles sont percés, à intervalles réguliers,des trous destinés à recevoir un organe mobile de verrouillage du siège,gorge dans laquelle s'agrippe un organe d'arrimage solidaire de chaque pied de chaque siège et empêchant la sortie de cet organe d'arrimage tout en permettant son coulissement longitudinal, les pieds des sièges étant reliés par des lattes de liaison longitudinales , caractérisé en ce qu'il comporte une latte (6) formant butée fixée sur le rail (3), présentant une boutonnière longitudinale (16) traversée par l'organe d'arrimage (2) solidaire du pied du siège et dont les deux extrémités (16a,16b)constituent des butées antérieure et postérieure limitant positivement la course vers l'avant et vers l'arrière de l'organe d'arrimage (2) et par conséquent du siège.

2.- Dispositif suivant la revendication 1, caractérisé en ce que la latte (6) formant butée porte, sur sa face inférieure, des pions de centrage (7) d'un diamètre légèrement inférieur au diamètre des trous (5) du rail (3) et engagés dans certains de ces trous pour maintenir la latte (6).

3.- Dispositif suivant la revendication 2, caractérisé en ce que la latte (6) formant butée porte des vis quart de tour (9) dont la tête (12) est accessible d'en haut et comportant une patte diamétrale (11) pouvant s'engager sous les lèvres (3a) du rail (3), pour immobiliser la latte (6).

4.- Dispositif suivant l'une quelconque des revendications 1 à 3, caractérisé en ce que la latte (6) formant butée présente des bossages inférieurs (15), de forte épaisseur, s'étendant longitudinalement et venant se loger entre les lèvres (3a) du rail (3).

5.- Dispositif suivant l'une quelconque des revendications 1 à 4, caractérisé en ce que la latte (6) formant butée est recouverte et solidaire d'un couvre-rail (13) et le pied (1) du siège est solidaire d'une lame longitudinale et horizontale (17) partant de ce pied et s'engageant entre le couvre-rail (13) et la latte (6) formant butée.

6.- Dispositif suivant l'une quelconque des revendications 1 à 5, dans lequel le mouvement du siège est provoqué par un moteur, caractérisé en ce qu'il comporte des moyens provoquant automatiquement et pendant un court laps de temps, après l'arrêt du mouvement du moteur d'entraînement dans un sens déterminé, le mouvement de ce moteur en sens inverse.

7.- Dispositif suivant la revendication 6, dans lequel le moteur d'entraînement est du type électrique et est accouplé, par l'intermédiaire d'un limiteur de couple, à un mécanisme transformant le mouvement de rotation du moteur en un mouvement de translation, caractérisé en ce que le circuit d'alimentation électrique du moteur (21) comprend deux contacteurs de marche avant (26) et de marche arrière (27) branchés en parallèle, deux commutateurs de marche avant (28) et de marche arrière (29), un circuit de temporisation en marche avant (31), un circuit de temporisation en marche arrière (32) et des premier et second relais (33, 34) reliés respectivement aux sorties des circuits de temporisation en marche avant (31) et arrière (32), ainsi qu'une alimentation (35) délivrant une tension continue, les communs des deux commutateurs (28, 29) étant reliés à un pôle de l'alimentation (35), leurs contacts de repos étant connectés respectivement aux entrées des deux circuits de temporisation (31 et 32), le contact de travail du commutateur de marche avant (28) étant relié d'une part à l'entrée du circuit de temporisation en marche avant (31), par l'intermédiaire d'un contact de travail (34a) du second relais (34), et d'autre part à la bobine du contacteur de marche avant (26), par l'intermédiaire d'un contact de repos (27a) du contacteur de marche arrière (27), le contact de repos du commutateur de marche arrière (29) étant relié à l'entrée du circuit de temporisation en marche arrière (32) ,tandis que le contact de travail du commutateur de marche arrière (29) est relié à l'entrée du circuit de temporisation en marche arrière (32) par l'intermédiaire d'un contact de travail (33a) du premier relais (33), et également à la bobine du contacteur de marche arrière (27), par l'intermédiaire d'un contact de repos (26a) du contacteur de marche avant (26).

Fig.1

Fig.2

Fig.3

1/2

0094880

0094880

2/2

Fig.4

Office européen
des brevets

**RAPPORT DE RECHERCHE EUROPEENNE**

Numéro de la demande

EP    83  40  0961

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | EP-A-0 021 933  (TISSMETAL) <br> * En entier * <br><br> ----- | 1 | B 64 D   11/06 <br> B 60 P    7/08 |

**DOMAINES TECHNIQUES RECHERCHES (Int. Cl. ³)**

B 64 C
B 64 D
B 60 N
B 60 P

Le présent rapport de recherche a été établi pour toutes les revendications

| Lieu de la recherche <br> LA HAYE | Date d'achèvement de la recherche <br> 28-06-1983 | Examinateur <br> ZERI A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

OEB Form 1503. 03.82